# EUROPEAN PATENT APPLICATION

(11) **EP 4 604 190 A1**
(43) Date of publication of application: **20.08.2025**
(21) Application number: 24823785.1
(22) Date of filing: 12.06.2024
(51) Int. Cl.: H01M 4/04, B05B 3/04, B05B 12/16

(54) **APPARATUS FOR MANUFACTURING SECONDARY BATTERY AND METHOD FOR MANUFACTURING SECONDARY BATTERY USING SAME**

(30) Priority: 15.06.2023 KR 20230076992
(71) Applicant: LG Energy Solution, Ltd., Seoul 07335 (KR)
(72) Inventor: PARK, Min Gu, Daejeon 34122 (KR); PARK, Joon Sun, Daejeon 34122 (KR); LEE, Taek Soo, Daejeon 34122 (KR)
(74) Representative: Plasseraud IP
(86) International application number: PCT/KR2024/095880
(87) International publication number: WO 2024/258269

(57) **Abstract**

Example embodiments provide a secondary battery manufacturing apparatus. The secondary battery manufacturing apparatus includes a drying chamber, and a water spray device configured to spray water onto an electrode sheet in the drying chamber, in which the water spray device includes a nozzle configured to be rotated.

## Description

### [Technical Field]

The present invention relates to a secondary battery manufacturing apparatus and a secondary battery manufacturing method using the same.

The present application claims the benefit of priority based on Korean Patent Application No. 10-2023-0076992, filed on June 15, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, owing to improved energy density and economies of scale, manufacturing costs of electric-powered hybrid electric vehicles (HEVs) and battery electric vehicles (BEVs) have dramatically decreased and a range of BEVs has increased to the same level as that of fuel vehicles, and thus, a main use of secondary batteries is moving from mobile devices to automobile.

An electrode drying process is a process of removing moisture from positive and negative electrodes after applying an active material on sheet type positive and negative electrode plates, before the positive and negative electrode plates are separated from each other. The yield and reliability of a secondary battery can be improved by uniformly drying all surfaces of an electrode sheet.

### [Disclosure]

### [Technical Problem]

The present invention is directed to providing a secondary battery manufacturing apparatus with improved reliability.

### [Technical Solution]

Embodiments of the present invention provide a secondary battery manufacturing apparatus. The secondary battery manufacturing apparatus includes a drying chamber, and a water spray device configured to spray water to an electrode sheet in the drying chamber, in which the water spray device includes a nozzle configured to be rotated.

An axis of rotation of the nozzle may be parallel to a machine direction of the electrode sheet.

The water spray device may include a motor configured to generate a driving force for rotating the nozzle, and a first gear between the motor and the nozzle.

The water spray device may further include a second gear between the first gear and the nozzle.

The secondary battery manufacturing apparatus may further include a controller configured to control the rotation of the nozzle.

The controller may be configured to receive a recipe of the electrode sheet from a server.

The controller may be configured to generate a signal for controlling an orientation of the nozzle, based on the recipe.

The water spray device may be configured to spray water to an uncoated part of the electrode sheet.

According to example embodiments provide a secondary battery manufacturing method. The secondary battery manufacturing method includes coating an electrode current collector with an electrode slurry, adjusting an orientation of a nozzle of a water spray device, and drying an electrode sheet, in which the electrode sheet is unwound from an electrode roll provided by winding the electrode current collector coated with the electrode slurry, and the water spray device is configured to spray water onto the electrode sheet through the nozzle during the drying of the electrode sheet.

The electrode sheet may include coated lanes coated with the electrode slurry and an uncoated part between the coated lanes, and the water may be sprayed onto the uncoated part of the electrode sheet.

The adjusting of the orientation of the nozzle of the water spray device may include rotating the nozzle about an axis of rotation parallel to a machine direction of the electrode sheet.

The orientation of the nozzle may be adjusted based on a recipe of the electrode sheet.

### [Advantageous Effects]

According to example embodiments of the present invention, an orientation of a nozzle of a water spray device can be adjusted. Accordingly, the spray of the nozzle can be controlled in response to changes in the design and form factor of electrodes of a secondary battery to reduce capital expenditure and improve the reliability of manufacture of the secondary battery.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a diagram for describing a secondary battery manufacturing system according to example embodiments.
FIG. 2 is a plan view of an electrode sheet and a water spray device.
FIG. 3 is a top view of the water spray device.
FIG. 4 is a cross-sectional view of the water spray device.
FIG. 5 is a flowchart of a method of manufacturing an electrode according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

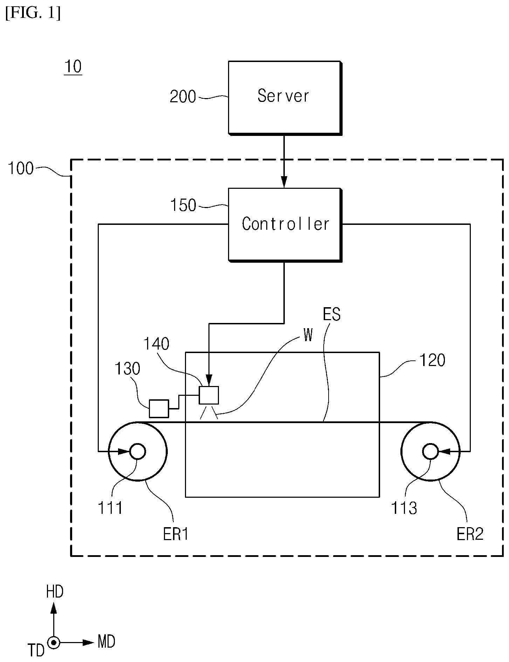

FIG. 1 is a diagram for describing a secondary battery manufacturing system 10 according to example embodiments.

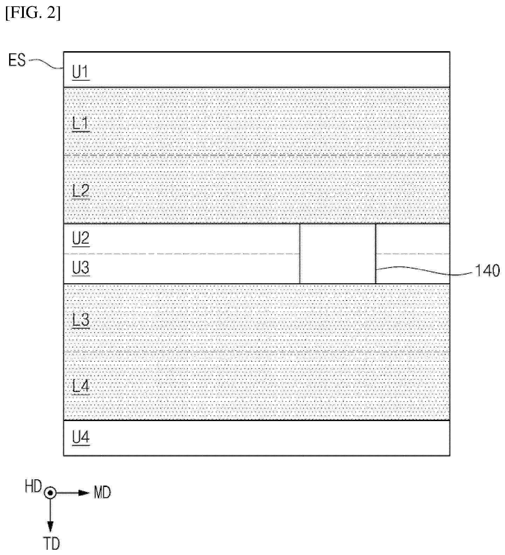

FIG. 2 is a plan view of an electrode sheet ES and a water spray device 140.

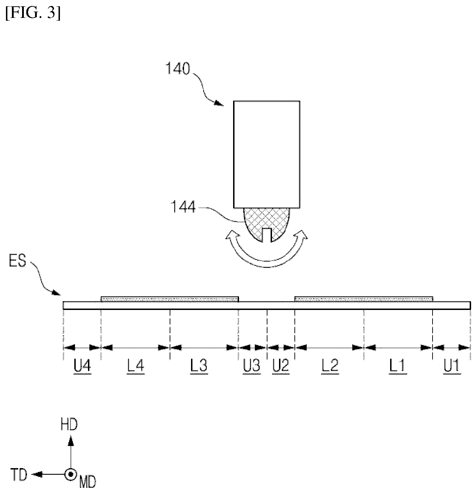

FIG. 3 is a top view of the water spray device 140.

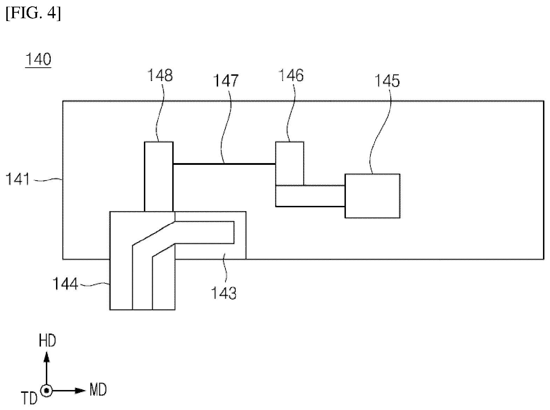

FIG. 4 is a cross-sectional view of the water spray device 140.

Referring to FIGS. 1 to 4, the secondary battery manufacturing system 10 may include a secondary battery manufacturing apparatus 100 and a server 200.

The secondary battery manufacturing apparatus 100 may be configured to perform a drying process on the electrode sheet ES. The electrode sheet ES may be unwound from an electrode roll ER1 loaded on an unwinder 111. The electrode sheet ES may be processed by the secondary battery manufacturing apparatus 100. The electrode sheet ES processed by the secondary battery manufacturing apparatus 100 may be wound around an electrode roll ER2. Accordingly, an electrode process performed on the electrode sheet ES may be a roll-to-roll process. In the roll-to-roll process, the electrode sheet ES may be moved in a machine direction MD.

A drying process may be performed based on temperature control and dew point control inside a drying chamber 120. The drying process may include maintaining a temperature and a dew point in the drying chamber 120 to be within set ranges according to values measured by a temperature sensor and a dew point sensor installed inside the drying chamber 120.

The electrode sheet ES may include first to four coated lanes L1, L2, L3 and l4 (hereinafter, L1 to L4). The first to fourth coated lanes L1 to L4 are parts of the electrode sheet ES coated with an active material. The first to fourth coated lanes L1 to L4 may be formed by a coating process using a die coater.

The first and second coated lanes L1 and L2 may be formed from the same slit of the die coater and be connected to each other. The third and fourth coated lanes L3 and L4 may be formed from the same slit of the die coater and may be connected to each other.

The first and second coated lanes L1 and L2 and the third and fourth coated lanes L3 and L4 may be separated by a slitting device. That is, the electrode sheet ES including the four coated lanes L1 to L4 may be cut by the slitting device into four individual electrode sheets including one of the first to fourth coated lanes L1 to L4.

Each of the coated lanes L1 to L4 may extend in the machine direction MD of the electrode sheet ES. The plurality of coated lanes L1 to L4 may be spaced apart from each other in a transverse direction TD of the electrode sheet ES. The transverse direction TD of the electrode sheet ES may be substantially perpendicular to the machine direction MD of the electrode sheet ES.

The electrode sheet ES may further include first to fourth uncoated parts U1, U2, U3, and U4 (hereinafter, U1 to U4). Each of first to fourth uncoated parts U1, U2, U3, and U4 is a part of the first electrode sheet ES1 that is not coated with the active material. The first and fourth uncoated parts U1 and U4 may be at opposite ends of the electrode sheet ES in the transverse direction TD. The first and fourth uncoated parts U1 and U4 may be spaced apart from each other with the first to fourth coated lanes L1 to L4 interposed therebetween. The second and third uncoated parts U2 and U3 may be interposed between the second and third coated lanes L2 and L3.

The first uncoated part U1 corresponds to the first coated lane L1, and the first uncoated part U1 and the first coated lane L1 may be included in the same electrode roll after the slitting process. The second uncoated part U2 corresponds to the second coated lane L2, and the second uncoated part U2 and the second coated lane L2 may be included in the same electrode roll after the slitting process. The third uncoated part U3 corresponds to the third coated lane L3, and the third uncoated part U3 and the third coated lane L3 may be included in the same electrode roll after the slitting process. The fourth uncoated part U4 corresponds to the fourth coated lane L4, and the fourth uncoated part U4 and the fourth coated lane L4 may be included in the same electrode roll after the slitting process.

Hereinafter, the technical idea of the present invention will be described with respect to the electrode sheet ES including the four coated lanes L1 to L4 and the four uncoated parts U1 to U4. Those of ordinary skill in the art will be able to easily derive a method of generating a roll map, for each process, of an electrode sheet that includes two, three, or five or more coated lanes and uncoated parts, based on the description herein.

The secondary battery manufacturing apparatus 100 may include the unwinder 111, a rewinder 113, the drying chamber 120, a water supply device 130, the water spray device 140, and a controller 150.

The unwinder 111 may be configured to unwind the electrode sheet ES from the first electrode roll ER1. The rewinder 113 may be configured to wind the electrode sheet ES around the electrode roll ER2.

The drying chamber 120 may be a drying oven. A ventilator, a heater, and the like may be included in the drying chamber 120. The ventilator may supply dry air into the drying chamber 120, and the electrode sheet ES may be dried by the dry air. The heater may be an infrared heater or an electric heater, and the electrode sheet ES may be dried by heat generated by the heater.

Additional guide rolls may be provided in the drying chamber 120 to adjust a path of the electrode sheet ES. Due to the additional guide rolls, a moving path of the electrode sheet ES in the drying chamber 120 may increase, a time required to process the electrode sheet ES in the drying chamber 120 may increase, and the efficiency of the drying process may improve.

The water supply device 130 may be configured to supply water W to the water spray device 140. The water supply device 130 may include a fluid inlet, a pump, a hall integrated sensor, and a flowmeter. The water W may be introduced from a water source through the fluid inlet. The pump may be configured to supply energy to move the water W to the water spray device 140. The pump may be a reciprocating pump or a centrifugal pump but embodiments are not limited thereto. The flowmeter may include an inner magnet, and the hall integrated sensor may be configured to sense a flow rate, based on a change in a magnetic field due to the inner magnet of the flowmeter.

The water spray device 140 may be configured to spray the water W on the electrode sheet ES. More specifically, the water spray device 140 may be configured to spray the water W on one or more of the uncoated parts U1, U2, U3, and U4 of the electrode sheet ES. Stress due to contraction is concentrated on the uncoated parts U2 and U3 between the coated lanes L1, L2, L3, and L4. The water spray device 140 may overlap the uncoated parts U2 and U3 in a height direction HD. The height direction HD may be substantially perpendicular to each of the machine direction MD and the transverse direction TD.

The water spray device 140 may supply the water W to the uncoated parts U2 and U3 to prevent defects such as wrinkles and cracks from occurring in the electrode sheet ES due to excessive drying of the uncoated parts U2 and U3.

The water spray device 140 may include a housing 141, a fluid supply line 143, a nozzle 144, a motor 145, a first gear 146, a shaft 147, and a second gear 148. The housing 141 may include components of the water spray device 140, such as the fluid supply line 143, the nozzle 144, the motor 145, the first gear 146, the shaft 147, and the second gear 148, therein and protect them. As a non-limiting example, the housing 141 may include a metal material.

The fluid supply line 143 may be connected to the water supply device 130. The fluid supply line 143 may be configured to supply the water W to the nozzle 144.

The nozzle 144 may be configured to spray the water W supplied through the fluid supply line 143. The nozzle 144 may be configured to be rotated. More specifically, the nozzle 144 may be configured to be rotated about an axis of rotation that is substantially parallel to the machine direction MD.

The nozzle 144 may be rotated by the motor 145, the first gear 146, the shaft 147, and the second gear 148. The orientation of the nozzle 144 may be adjusted by the motor 145, the first gear 146, the shaft 147, and the second gear 148. Accordingly, the orientation of the nozzle 144 may be calibrated in response to a change in a form factor of the electrode sheet ES, thus increasing the reliability of the drying process.

The motor 145 may be configured to generate a driving force for rotating the nozzle 144. The motor 145 may be, for example, a motor for precise control, such as a servo motor and a step motor. The first gear 146 may be interposed between the motor 145 and the nozzle 144. The second gear 148 may be interposed between the first gear 146 and the nozzle 144. As a non-limiting example, each of the first gear 146 and the second gear 148 may be a helical gear or a spur gear. The first gear 146 and the second gear 148 may be connected by, for example, the shaft 147 but embodiments are not limited thereto. The shaft 147 may be omitted, and the first gear 146 and the second gear 148 may be in direct contact with each other. A driving force generated by the motor 145 may be transmitted to the nozzle 144 via the first gear 146, the shaft 147, and the second gear 148, and the nozzle 144 may be rotated by the driving force.

The controller 150 may be configured to control the drying process. The controller 150 may be configured to control moving and stopping of the electrode sheet ES, process parameters, such as temperature, humidity, pressure, and a dew point, in the drying chamber 120, the supply of the water W by the water supply device 130, and the spray of the water W by the water spray device 140. The control of the spray of the water W by the water spray device 140 may include control of discharging the water W, stopping the discharging of the water W, a discharge amount of the water W, and an spray direction of the water W.

The controller 150 may be configured to generate a control signal for controlling the motor 145. The controller 150 may be, for example, a programmable logic controller (PLC). The PLC is a special type of microprocessor-based controller that stores instructions using a programmable memory and implements functions such as logic, sequencing, timing, counting and an arithmetic operation to control machines and processes. It is easy to operate and program the PLC. The controller 150 may include a power supply, a central process unit (CPU), an input interface, an output interface, a communication interface, and memory devices.

The controller 150 may be configured to receive a work order from the server 200. A communication line may be installed between the controller 150 and the server 200 to control a process. The work order may include model information and a recipes for processing the electrode sheet ES. The work order may include various matters related to the processing of the electrode sheet ES, e.g., process parameters including the number of lots to be processed in a current process, the number of coated parts on the electrode sheet ES, process conditions including temperature, humidity and pressure, a driving speed of the electrode sheet ES, etc.

The controller 150 may be configured to control an spray direction of the water spray device 140 (i.e., an orientation of the nozzle 144) based on the recipe of the work order. The controller 150 may be configured to generate a signal for control of an spray direction of the water spray device 140 (i.e., an orientation of the nozzle 144) based on the recipe of the work order.

According to example embodiments, the server 200 may be a data processing system that supports all activities required to manage the manufacture of a secondary battery, such as work schedule management, work instructions, quality control, and work performance aggregation. The server 200 may be, for example, a manufacturing execution system (MES). The server 200 may be configured to perform inputting, processing, outputting, and communication of data necessary for the manufacture of electrodes, including a coating process, the drying process, a press process, and a manufacturing process.

### (Second Embodiment)

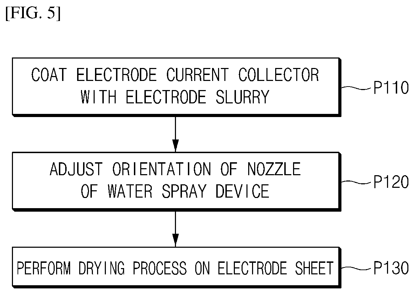

FIG. 5 is a flowchart of a method of manufacturing an electrode according to example embodiments.

Referring to FIGS. 1 and 5, in P110, an electrode current collector may be coated with an electrode slurry.

The electrode roll ER1 may be provided by applying an electrode slurry containing an electrode active material on a current collector, drying and roll-pressing the electrode slurry to form an electrode mixture layer, and winding the current collector. The electrode slurry may be applied on the current collector by a coating die. The coating die may be, for example, a slot die. The current collector may be a positive electrode current collector or a negative electrode current collector, and the electrode active material may be a positive electrode active material or a negative electrode active material. The electrode slurry may include a conductive material and a binder, as well as the electrode active material.

A thickness of the positive electrode current collector may range from about 3 µm to about 500 µm. The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of the negative electrode current collector may be in a range of about 3 µm to about 500 µm. The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of film, sheet, foil, net, porosity, foam, nonwoven fabric or the like.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}CO_{1/3}Mn_{1/3}O₂ or Li_{1+zN}i_{0.4}Mn_{0.4}CO_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

Generally, the conductive material accounts for about 1% to about 30% by weight in a mixture containing the cathode active material. The conductive material may not cause a chemical change in a finally manufactured secondary battery and may have conductivity. For example, the conductive material may include: graphite such as natural graphite or artificial graphite; carbon black such as acetylene black, Ketjen black, channel black, furnace black, lamp black or thermal black; conductive fibers such as carbon fibers or metal fibers; metal powder such as carbon fluoride, aluminum or nickel powder; conductive whisker such as zinc oxide or potassium titanate; conductive metal oxide such as titanium oxide; polyphenylene derivatives, or the like.

The binder may enhance a binding force between the active material and the conductive material and a binding force of the current collector. The binder accounts for about 1% to about 30% by weight in the mixture containing the positive electrode active material. The binder may include, for example, polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-propylene-diene ter polymer (EPDM), sulfonated EPDM, styrene-butyrene rubber, fluorine rubber, various copolymers, or the like.

The electrode slurry may be prepared by dissolving the electrode active material, the conductive material, the binder, etc. in a solvent. The solvent may disperse the electrode active material and the like. The solvent may be an aqueous solvent or a non-aqueous solvent. The solvent may include dimethyl sulfoxide (DMSO), isopropyl alcohol, N-methylpyrrolidone (NMP), acetone, water or a mixture thereof. The amount of the solvent to be used may be adjusted such that the slurry has an appropriate viscosity in consideration of a coating thickness, a preparation yield, workability, etc. of the slurry.

Referring to FIGS. 1, 3, and 5, in P120, the orientation of the nozzle 144 of the water spray device 140 may be adjusted. The orientation of the nozzle 144 may be adjusted based on a control signal generated based on a work order as described above. The adjusting of the orientation of the nozzle 144 may include rotating the nozzle 144 about an axis of rotation substantially parallel to the machine direction MD. The adjusting of the orientation of the nozzle 144 may be performed before the drying process.

Next, in P130, the drying process may be performed on the electrode sheet ES. The drying of the electrode sheet ES is substantially the same as that described above with reference to FIGS. 1 to 4. During the drying of the electrode sheet ES, water W may be sprayed onto the electrode sheet ES by the water spray device 140. The adjusting of the orientation of the nozzle 144 may be performed in real time while the drying process is performed in P130.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing apparatus comprising:
a drying chamber; and
a water spray device configured to spray water to an electrode sheet in the drying chamber,
wherein the water spray device includes a nozzle configured to be rotated.

2. The secondary battery manufacturing apparatus of claim 1, wherein an axis of rotation of the nozzle is parallel to a machine direction of the electrode sheet.

3. The secondary battery manufacturing apparatus of claim 1, wherein the water spray device comprises:
a motor configured to generate a driving force for rotating the nozzle; and
a first gear between the motor and the nozzle.

4. The secondary battery manufacturing apparatus of claim 3, wherein the water spray device further includes a second gear between the first gear and the nozzle.

5. The secondary battery manufacturing apparatus of claim 1, further comprising a controller configured to control the rotation of the nozzle.

6. The secondary battery manufacturing apparatus of claim 5, wherein the controller is configured to receive a recipe of the electrode sheet from a server.

7. The secondary battery manufacturing apparatus of claim 6, wherein the controller is configured to generate a signal for controlling an orientation of the nozzle, based on the recipe.

8. The secondary battery manufacturing apparatus of claim 1, wherein the water spray device is configured to spray water to an uncoated part of the electrode sheet.

9. A secondary battery manufacturing method comprising:
coating an electrode current collector with an electrode slurry;
adjusting an orientation of a nozzle of a water spray device; and
drying an electrode sheet,
wherein the electrode sheet includes the electrode current collector coated with the electrode slurry, and
the water spray device is configured to spray water onto the electrode sheet through the nozzle during the drying of the electrode sheet.

10. The secondary battery manufacturing method of claim 9, wherein the electrode sheet includes coated lanes coated with the electrode slurry and an uncoated part between the coated lanes, and
the water is sprayed onto the uncoated part of the electrode sheet.

11. The secondary battery manufacturing method of claim 9, wherein the adjusting of the orientation of the nozzle of the water spray device includes rotating the nozzle about an axis of rotation parallel to a machine direction of the electrode sheet.

12. The secondary battery manufacturing method of claim 9, wherein the orientation of the nozzle is adjusted based on a recipe of the electrode sheet.
